(19) Europäisches Patentamt
European Patent Office
Office européen des brevets

(11) Publication number: **0 159 683**
**A2**

# (12) EUROPEAN PATENT APPLICATION

(21) Application number: **85104819.9**

(22) Date of filing: **20.04.85**

(51) Int. Cl.[4]: **C 09 D 3/22**, C 09 D 5/00

(30) Priority: **23.04.84 US 603219**

(43) Date of publication of application: **30.10.85 Bulletin 85/44**

(84) Designated Contracting States: **BE DE FR GB IT NL**

(71) Applicant: **DeSOTO, INC., 1700 South Mt. Prospect Road, Des Plaines Illinois 60018 (US)**

(72) Inventor: **Huh, John H., 2348 Cannon Drive, Mount Prospect Ill. 60056 (US)**
Inventor: **Fieder, Donald W., 2205 Kedvale Avenue, Chicago Ill. 60639 (US)**
Inventor: **Pasternack, George, 38 Oxdford Drive, Lincolnshire Ill. 60015 (US)**

(74) Representative: **Reitzner, Bruno, Dr. et al, Patentanwälte Dipl.-Ing. R. Splanemann Dr. B. Reitzner Tal 13, D-8000 München 2 (DE)**

## (54) Electron beam-curable release coatings.

(57) An electron beam-curable liquid release coating composition is disclosed which comprises: (1) from 60 to 95 parts of an organopolysiloxane having more than about 25 siloxane groups per molecule and from 2–10 reacted carbinol groups per molecule, the remaining silicon substituents being $C_1$–$C_{20}$ hydrocarbon groups, said reacted carbinol groups being esters with acrylic acid, methacrylic acid or a mixture of these acids, or ethers with an hydroxy alkyl ester thereof, unreacted carbinol groups being substantially absent as indicated by an hydroxyl value of less than 10; (2) from 3 to 25 parts of a polyester of a polyhydric alcohol having 2–4 carbon atoms with acrylic acid, methacrylic acid or a mixture of these acids, said polyhydric alcohol having a molecular weight of less than 1200; and (3) from 1 to 10 parts of acrylic acid, methacrylic acid, or a mixture of said acids. The low hydroxyl value provides improved compatibility, and the addition of the acid component inproves abrasion resistance and solvent resistance without impairing release properties. Small amounts of diol diacrylates are preferred.

EP 0 159 683 A2

0159683



# ELECTRON BEAM-CURABLE RELEASE COATINGS

## DESCRIPTION

### Technical Field

This invention relates to electron beam-curable release coatings.

### Background Art

Radiation-curable coating compositions intended to cure on electron beam exposure to provide a poorly adherent surface which will easily release adhesive tapes adhered thereto are known, as illustrated by U. S. Patent No. 4,201,808. In this patent, from 10 to 90 weight percent of the radiation-curable silicone release coating composition is constituted by a relatively high molecular weight organopolysiloxane having acryloxy or methacryloxy groups, and from 90 to 10 weight percent of the composition is constituted by either a low molecular weight di-, tri- or tetrafunctional acrylate or methacrylate esters of a polyfunctional alcohol, or by a lower molecular weight siloxane polyacrylate. These multicomponent mixtures cure to provide adequate release properties, but they tend to separate on standing, they do not cure with desired rapidity on electron beam exposure, and the solvent resistance and hardness are inadequate.

This invention is directed toward improving the inadequate properties which characterize the compositions now in use.

### Description of Invention

In accordance with this invention, an electron beam-curable liquid release coating composition comprises: (1) from 60 to 95 parts of an organopolysiloxane having more than about 25 siloxane groups per molecule and from 2-10 reacted carbinol groups per molecule, the remaining silicon

substituents being $C_1$-$C_{20}$ hydrocarbon groups, said reacted carbinol groups being esters with acrylic acid, methacrylic acid or a mixture of said acids, or ethers with an hydroxy alkyl ester of these acids in which the alkyl group contains 2-4 carbon atoms, unreacted carbinol groups being substantially absent as indicated by an hydroxyl value of less than 10, preferably less than 5; (2) from 3 to 25 parts of a polyester of a polyhydric alcohol with acrylic acid, methacrylic acid or a mixture of said acids, said polyhydric alcohol having from 2-4 hydroxy groups per molecule and a molecular weight of less than 1200; and (3) from 1 to 10 parts of acrylic acid, methacrylic acid, or a mixture of said acids.

These new compositions exhibit improved stability, and the presence of the acrylic acid, methacrylic acid or a mixture of said acids functions to enhance the abrasion resistance and solvent resistance of the cured coatings. At the same time, the release properties of the cured coatings is fully comparable to that which is obtainable with the prior art compositions, or somewhat superior thereto. As a matter of interest, the proportion of low molecular weight polyacrylate is preferably reduced in this invention to a level below the 10 weight percent minimum required in the prior art.

With respect to the achievement of equivalent release properties, this is the case regardless of whether one measures the release properties of the initially deposited and cured film, or whether the cured film is stored at elevated temperature (70°C.) for 60 hours before the release properties are measured. This heat aging test is intended to approximate the storage conditions which are sometimes encountered in commerce before the product is used by the ultimate purchaser.

To illustrate the results achieved by this invention, a commercial control was tested, and provided good initial release properties, but the adhesive tape delaminated from the electron beam-cured film after about 20 hours of elevated temperature exposure. This commercial control had a soft film which was easily scratched. Using an acrylated polysiloxane polycarbinol to be described hereinafter and the diacrylate of the diethylene oxide adduct of neopentyl glycol which is (1,5,5,9-tetramethyl-3,7-oxa-nonane-1,9-diacrylate) in weight proportions of 87:13, the initial release properties were good, and the release properties after elevated temperature exposure were also good, but the film was soft and solvent-sensitive. When the just-described mixture is modified by replacing 4.3 weight percent of the the same glycol diacrylate with an equal weight proportion of acrylic acid, the release properties were substantially the same, but the film was more scratch resistant and more solvent resistant. Replacing 8.7 weight percent of the same glycol diacrylate with an equal weight proportion of acrylic acid, the initial release properties were improved, and the film was even more scratch resistant and solvent resistant.

Referring more particularly to the organopolysiloxane having more than about 25 siloxane groups per molecule and from 2-10 carbinol groups per molecule, these are well known and are available in commerce. It is preferred that there be from 50 to 500 siloxane groups per molecule and that there be from 3-6 carbinol groups per molecule. The remaining silicon substituents are usually phenyl groups or methyl groups, preferably the latter, but other illustrative groups which may be bonded to the silicon atom are ethyl, propyl, butyl, octyl,

dodecyl, toluyl, xylyl, and the like.

These carbinol groups are substantially completely reacted by using a large excess of acrylic or methacrylic acid or hydroxyalkyl ester thereof to react with the carbinol functionality and continuing the reaction until the hydroxy number has the desired low value. It has been found that the instability which characterized the prior commercial compositions is the result of inadequate consumption of the carbinol groups in the polysiloxane.

These carbinol groups can be reacted to form esters with acrylic acid, methacrylic acid or a mixture of these acids, or to form ethers with an hydroxy alkyl ester thereof. Ester formation with acid is preferred. The excess acid is removed with heat under vacuum together with the inert volatile solvent, such as hexane or heptane, used to facilitate reaction. The desired ester formation is carried out in the presence of the usual esterification catalysts, like sulfuric acid, and the desired ether formation is carried out in the presence of the usual etherification catalyst, like boron trifluoride etherate. These reactions are common knowledge in the art and pose no difficulty by themselves. In preferred practice, at least 2 moles of acrylic acid are used per carbinol group.

The preferred polysiloxane polycarbinols are methyl substitued and have the following formula:

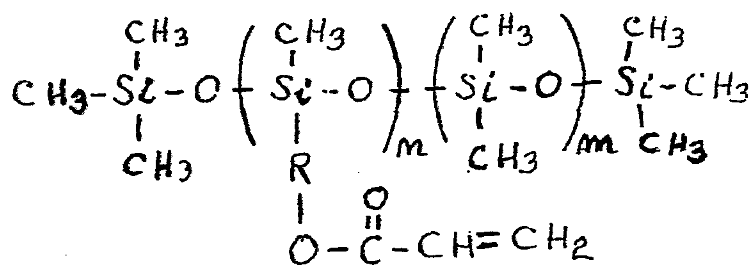

in which n is from 2-6, m is from 50 to 500, and R is an alkylene group containing from 2-16 carbon atoms, preferably from 2-4 carbon atoms, such as ethylene, propylene and butylene. The product in which R is propylene, n is 3 and m is 100 is preferred and will be used as illustrative. It will be understood that the groups which are present in the number designated n may be scattered throughout the polysiloxane chain, and the style of the formula is not intended to position these groups along the chain.

The second component used herein is the same as in said patent 4,201,808, namely, a polyester of a polyhydric alcohol with acrylic acid, methacrylic acid or a mixture of said acids, the polyhydric alcohol having from 2-4 hydroxy groups per molecule and a molecular weight of less than 1200. These are subject to considerably variation and are illustrated by diol diacrylates, such as butylene glycol diacrylate, hexane diol diacrylate and octane diol diacrylate, triol diacrylates, such as glycerin diacrylate and trimethylol propane diacrylate, triol triacrylates, like trimethylol propane triacrylate, and pentaerythritol tri- and tetra- acrylates. While the acrylates are preferred, the corresponding methacrylates are also useful, and the acrylates and methacrylates can be used in admixture.

One can also use higher molecular weight species, such as the propylene oxide adducts of the polyhydric alcohols noted above, such as a propylene oxide adduct of trimethylol propane having a molecular weight of about 440. Molecular weights up to about 1200 are broadly useful, but it is preferred that the molecular weight of the polyhydric alcohol not exceed 600. Also, it is particularly preferred to use diol diacrylates since these provide good cures in combination with good release properties.

Neopentyl glycol adducted with two molar proportions of ethylene oxide is particularly preferred. The diacrylate of this compound has been named previously. The diol diacrylates also maximize compatibility, and all of the foregoing is accomplished using small amounts, such as from 4-8 parts, as is preferred herein.

The acid component is important because the presence of a small amount of acrylic acid, methacrylic acid, or a mixture thereof provides better scratch and solvent resistance, and as good or better release properties. It is preferred to use from 2 to 8 parts of this acid component.

As an optional component, it is permissible for the composition to further include from 1 to 15 parts of a monoacrylate or monomethacrylate monomer. Many esters of acrylic acid are useful here, such as methyl acrylate, methyl methacrylate, ethyl acrylate, n-butyl or isobutyl methacrylate, 2-ethyl hexyl acrylate, phenoxyethyl acrylate, isobornyl acrylate, and the like. These allow one to adjust the hardness to a limited extent.

The invention is illustrated in the examples which follow:

The methyl-substituted polysiloxane polycarbinol described previously in which there are three carbinol groups per molecule containing 100 siloxane groups with each carbinol group being carried by a propylene group, is mixed with 5.5 equivalents of acrylic acid for every carbinol equivalent in the polysiloxane in the presence of 0.2% by weight of sulfuric acid catalyst based on the total charge. Heptane solvent is present in an amount of 22.5% by weight of the total charge. This liquid mixture is heated to 80°C. and held at that temperature until the hydroxy value falls below 5.

The sulfuric acid, the heptane solvent, and the unreacted acrylic acid are all removed under vacuum at a temperature of 97°C. to 111°C., the vacuum being continued until the acid value is less than 10.

The product so-produced is a liquid polyacrylate and 87 parts of it are mixed with 4.3 parts of the diacrylate of the diethylene oxide adduct of neopentyl glycol and 8.7 parts of acrylic acid. Mixing is by stirring. The liquid mixture is coated upon paper to provide a film about 0.15 mil thick which is cured by exposure to an electron beam which applies a 3 megarad dose. Johnson and Johnson brand Red Cross brand adhesive tape is then pressed onto the cured coating with a pressure of 0.25 $lbs/inch^2$. Release values are obtained before and after heat aging with a Keil tester according to TAPPI test method RC283. The Keil tester is a peel tester which reports the grams of force required to peel off the tape from the release paper at a constant speed of 12 inches per minute. The improved initial release properties obtained by comparing the mixture described above with one in which 13 parts of the same glycol diacrylate replaces the mixture used, provides 20 gram removal force for the acrylic acid-containing mixture and 30-40 grams removal force for the comparable system in which the acrylic acid is not present. In contrast, the peel strength for the same adhesive tape on clean stainless steel is in the range of 700-750 grams removal force.

The presence of the acrylic acid did not change the peel strength after heat aging, but the cured films were harder, more scratch resistant, and more resistant to removal when rubbed with a cloth saturated with mineral spirits.

0159683

CLAIMS

1. An electron beam-curable liquid release coating composition comprising: (1) from 60 to 95 parts of an organopolysiloxane having more than about 25 siloxane groups per molecule and from 2-10 reacted carbinol groups per molecule, the remaining silicon substituents being $C_1$-$C_{20}$ hydrocarbon groups, said reacted carbinol groups being esters with acrylic acid, methacrylic acid or a mixture of said acids, or ethers with an hydroxy alkyl ester of these acids in which the alkyl group contains 2-4 carbon atoms, unreacted carbinol groups being substantially absent as indicated by an hydroxyl value of less than 10; (2) from 3 to 25 parts of a polyester of a polyhydric alcohol with acrylic acid, methacrylic acid or a mixture of said acids, said polyhydric alcohol having from 2-4 hydroxy groups per molecule and a molecular weight of less than 1200; and (3) from 1 to 10 parts of acrylic acid, methacrylic acid, or a mixture of said acids.

2. A release coating composition as recited in claim 1 in which said polyhydric alcohol is a dihydric alcohol and said composition further includes from 1 to 15 parts of a monoacrylate or monomethacrylate monomer.

3. A release coating composition as recited in claim 1 in which said organopolysiloxane contains from 50 to 500 siloxane groups and said hydrocarbon substituents are methyl groups.

4. A release coating composition as recited in claim 1 in which said organopolysiloxane contains from 3 to 6 carbinol ester groups with acrylic acid per molecule.

5. A release coating composition as recited in claim 4 in which said polyester is the diester of a dihydric alcohol with acrylic acid.

6. A release coating composition as recited in claim 5 in which said dihydric alcohol diacrylate is present in an amount of from 4 to 8 parts.

7. A release coating composition as recited in claim 6 in which said dihydric alcohol diacrylate is the diacrylate of the diethylene oxide adduct of neopentyl glycol.

8. A release coating composition as recited in claim 7 in which said organopolysiloxane polycarbinol polyacrylate has the formula:

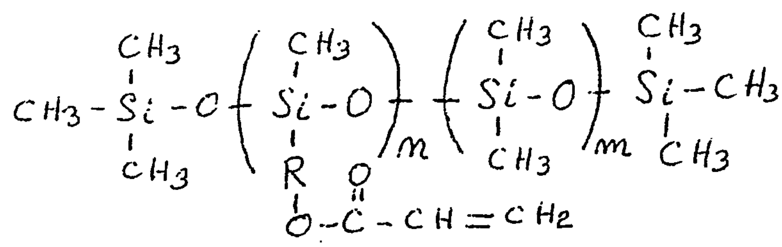

in which n is from 2-6, m is from 50 to 500, and R is an alkylene group containing from 2-16 carbon atoms, said polysiloxane polycarbinol having an hydroxyl value of less than 5.

9. A release coating composition as recited in claim 8 in which R is propylene, n is 3 and m is about 100 and there are from 2 to 8 parts of acrylic acid.

10. A release coating composition as recited in claim 9 in which the carbinol groups are substantially completely reacted by esterifying them with at least two moles of acrylic acid per carbinol group in inert organic solvent in the presence of an esterification catalyst, continuing the reaction until the hydroxy number has the stated low value, and then removing the excess acid together with the inert volatile solvent with heat under vacuum.